# EUROPEAN PATENT APPLICATION

(11) **EP 4 803 794 A1**
(43) Date of publication of application: **09.09.2026**
(21) Application number: 25425007.9
(22) Date of filing: 07.03.2025
(51) Int. Cl.: F16L 33/207

(54) **END FITTING FOR A REINFORCED THERMOPLASTIC PIPE**

(71) Applicant: Polyflow LLC, Midland, TX 79706 (US)
(72) Inventor: Bonanni, Michele, Montelupo Fiorentino (FI) (IT); Cureton, Timothy Lee, Arvada, CO (US)
(74) Representative: Ferriero, Paolo

(57) **Abstract**

There is provided an end fitting (100; 200) for a reinforced thermoplastic pipe, a flexible pipe (104; 204), and a method (300) of connecting an end fitting to an end portion (106; 206) of a pipe body (102; 202). The end fitting comprises a first tubular member (108; 208), and a second tubular member (110; 210) disposed radially outwardly of the first tubular member to define an annular gap (112; 212) therebetween for receiving an end portion of a pipe body. An outer diameter of the first tubular member is greater at a first end (116; 216) of the annular gap than at a second end (118; 218) of the annular gap. The first tubular member is only connected to the second tubular member at the second end of the annular gap.

## Description

### TECHNICAL FIELD

The invention relates to an end fitting for a reinforced thermoplastic pipe (RTP). The invention further relates to a flexible pipe, and a method of connecting an end fitting to an end portion of a pipe body.

### BACKGROUND

Flexible composite pipe has been replacing steel in many applications with great success, including oil and gas pipelines, due to its versatility and durability. Flexible composite pipe is used in conveying oil and gas field fluids, such as water, gas (for example, methane, ethane, CO₂) and hydrocarbon fluids, or other fluids such as hydrogen, and is typically used onshore or in shallow water applications (for example, less than 500 m water depth).

Reinforced thermoplastic pipe (RTP) is an example of a multi-layer flexible composite pipe reinforced by high-strength materials. RTP is suited to gas and oil transportation because of its ultra-low permeability and high strength, being capable of internal pressures exceeding 5,000 psi (~34.5 MPa), and may be qualified and supplied in accordance with the American Petroleum Institute specification API 15S. RTP is corrosion-resistant and more durable than steel pipe: RTP can withstand salt corrosion, as well as H₂S/CO₂ corrosion, hence contributing to a longer lifespan, when compared to steel pipe. Moreover, RTP can provide high flowrates due to a smooth inner surface and the inherent flexibility of the pipe, which removes the need for elbows.

RTP typically comprises at least one reinforcement layer to withstand internal pressure and/or tension in the pipe, when in use. Such reinforcement layer may comprise long fibres, fibre strands, braids, and the like, the filaments of which may be from one or more of steel, glass, carbon, aramid, basalt, or polyester, and which may also comprise a matrix material of a thermoplastic polymer. Fibres and/or strands and/or braids of fibres may be wound around the pipe in a helical manner, with lay angles optimised for pipe performance (i.e., the higher the angle the greater the pressure retainment capability, and the lower the angle the greater the tension capability), or interwoven into a braid around the liner pipe. Multiple layers of reinforcement may be applied sequentially at different lay angles to optimise and provide torsional balance to the structure in manufacture and use, i.e., RTP may comprise one or more intermediate reinforcement layers.

RTP may further comprise an inner liner of polymer, and an outer protective polymeric sheath layer. The inner liner layer may comprise a single layer of material, or a plurality of sub-layers co-extruded or co-axially extruded over each other with optional tie layers to retain incompatible polymer layers. Polymers for RTP manufacture include MDPE, HDPE, XLPE, PE-RT, polyamides (for example PA-12, PA-11, PA-66, PA-6), thermoplastic elastomers, flexible polyvinyl chloride, acrylonitrile butadiene styrene (ABS), polyphenylene sulphide (PPS), though other polymers or polymer alloys may be used. RTP may comprise filled polymers, where the polymer contains a portion of a filler material, such as fibres or particles.

RTP may be either of an unbonded construction, where the layers of the pipe are not bonded to each other, i.e., the inner fluid containing polymer liner layer is not bonded to the reinforcement layer, which is in turn not bonded to the outer protective sheath polymer layer, or of a bonded construction, i.e., all layers are bonded to each other as part of the pipe manufacturing resulting in a pipe which is in effect a single, consolidated layer comprising sub-layers. Unbonded RTP may be suitable for similar applications to bonded RTP, but is manufactured differently. In comparison with bonded RTP, unbonded RTP may be manufactured more quickly (as there is no need to bond or consolidate layers along the full length of the pipe, nor additional inspection to confirm such retaining is achieved), and is therefore more cost effective, and results in a pipe which is more flexible during handling and installation, being able to maintain and operate at a smaller bend radius without risk of damage to the pipe structure.

An end fitting, or coupling, provides a sealing transition between the pipe and a connecting component, and transmits normal service loads acting on the pipe, without allowing the pipe to fail. End fittings may be used for connecting sections of RTP to one another or for connecting a section of RTP to, for example, terminal equipment. As such, RTP can be used, inter alia, to provide a flexible composite pipe assembly for transporting fluids from a well-head location to an export terminus, or to a refinery. In such a pipe assembly, a first section of RTP may be connected to one or more further sections of RTP. Each section of RTP may include at least one end fitting.

Known methods of connecting an end fitting to an end portion of RTP include swaging and/or crimping, in which a mechanical or hydraulic tool compresses and/or otherwise deforms the end fitting about the end portion of RTP, creating a frictional connection between the end fitting and the end portion of RTP. However, for RTP, in particular unbonded RTP, having a reinforcement layer with a low coefficient of friction, the friction between the end fitting and RTP may not provide a sufficient anchoring length. Failure to provide sufficient anchoring length may result in the end portion of RTP disconnecting from the end fitting, during use.

It is an object of embodiments of the invention to provide an improved end fitting for RTP and/or at least mitigate one or more problems associated with known arrangements.

### SUMMARY OF THE INVENTION

According an aspect of the invention, there is provide an end fitting for a reinforced thermoplastic pipe, the end fitting comprising: a first tubular member; and a second tubular member disposed radially outwardly of the first tubular member to define an annular gap therebetween for receiving an end portion of a pipe body, wherein an outer diameter of the first tubular member is greater at a first end of the annular gap than at a second end of the annular gap, and wherein the first tubular member is only connected to the second tubular member at the second end of the annular gap.

This arrangement inhibits the removal of an end portion of a pipe body from the first end of the end fitting, thereby improving the anchoring capacity of the end fitting. Improving the anchoring capacity of the end fitting is such that RTP, in particular unbonded RTP, having a reinforcement layer with a low coefficient of friction may be connected to the end fitting with a sufficient anchoring length.

In certain embodiments, the end fitting may be configured such that, when an end portion of a pipe body is connected to the end fitting, removal of the end portion of the pipe body from the annular gap may be inhibited.

In certain embodiments, the annular gap may comprise an opening defined between the first tubular member and the second tubular member at the first end of the annular gap.

In certain embodiments, at least a portion of the first tubular member may taper towards the second end of the annular gap.

In certain embodiments, the first tubular member may taper linearly.

In certain embodiments, at least a portion of the second tubular member may taper towards the first end of the annular gap.

In certain embodiments, the second tubular member may taper linearly.

In certain embodiments, an outer diameter of the second tubular member may be greater at the second end of the annular gap than at the first end of the annular gap, and an inner diameter of the second tubular member at the first and second ends of the annular gap may be substantially equal.

In certain embodiments, an outer diameter of the second tubular member at the first and second ends of the annular gap may be substantially equal, and an inner diameter of the second tubular member may be greater at the first end of the annular gap than at the second end of the annular gap.

In certain embodiments, the second tubular member may be disposed coaxially about the first tubular member.

In certain embodiments, the first tubular member may be a stem and/or the second tubular member may be a ferrule.

In certain embodiments, a radially outer surface of the first tubular member and/or a radially inner surface of the second tubular member may comprise one or more of radially projecting teeth or knurls, surface undulations, and recesses for O-rings.

In certain embodiments, the first tubular member and/or the second tubular member may comprise or may be formed of one or more of a metallic material, steel, aluminium, copper brass, a reinforced or non-reinforced thermoplastic polymer, a reinforced or non-reinforced thermoset polymer, and a composite material.

In certain embodiments, a third tubular member may be in intimate relation with a radially outer surface of the second tubular member to support the second tubular member.

According to another aspect of the invention, there is provided a flexible pipe, the flexible pipe comprising: an end fitting according to an aspect of the invention; and a pipe body, wherein an end portion of the pipe body is disposed in the annular gap.

In certain embodiments, the pipe body may comprise a reinforced thermoplastic pipe, and optionally the reinforced thermoplastic pipe may be unbonded.

According to yet another aspect of the invention, there is provided a method of connecting an end fitting to an end portion of a pipe body, the method comprising the steps of: providing an end fitting according to an aspect of the invention; providing a pipe body and disposing an end portion of the pipe body in the annular gap; and deforming the end fitting to clamp the end portion of the pipe body between the first and second tubular members.

In certain embodiments, the pipe body may comprise a reinforced thermoplastic pipe, and optionally the reinforced thermoplastic pipe may be unbonded.

In certain embodiments, the deforming the end fitting may comprise swaging the first tubular member and/or the second tubular member.

In certain embodiments, the swaging the second tubular member may comprise urging a third tubular member about a radially outer surface of the second tubular member to support the second tubular member.

### BRIEF DESCRIPTION OF THE DRAWINGS

Embodiments of the invention will now be described, by way of example only, with reference to the accompanying figures, in which:
Figure 1A is a cross-sectional schematic view of an end fitting for a reinforced thermoplastic pipe according to an embodiment of the invention;
Figure 1B is a cross-sectional schematic view of the end fitting of Figure 1A connected to an end portion of a pipe body;
Figure 2A is a cross-sectional schematic view of an end fitting for a reinforced thermoplastic pipe according to a further embodiment of the invention;
Figure 2B is a cross-sectional schematic view of the end fitting of Figure 2A connected to an end portion of a pipe body; and
Figure 3 is a flowchart of a method of connecting an end fitting to an end portion of a pipe body according to an embodiment of the invention.

### DETAILED DESCRIPTION OF EMBODIMENTS OF THE INVENTION

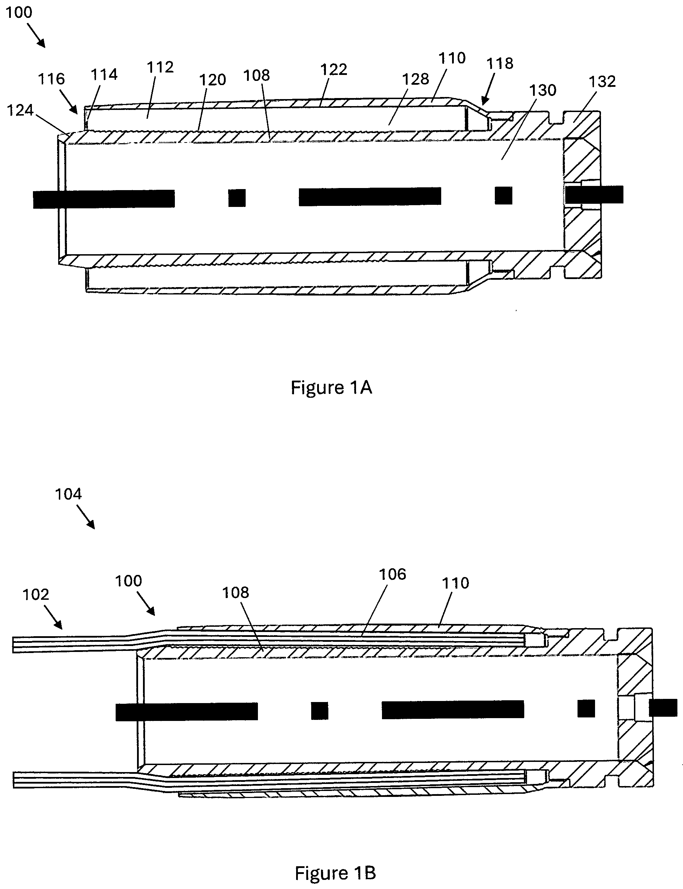

Figures 1A and 1B illustrate an end fitting 100 according to an embodiment of the invention, in an unconnected state and a connected state, respectively. The end fitting 100 may have particular application in conveying oil and/or gas field fluids, such as water, gas (e.g., methane, ethane, CO₂), and hydrocarbon fluids, or other fluids such as hydrogen. Moreover, the end fitting 100 may have particular application in onshore, shallow water, and/or very shallow water applications. As used herein, shallow water is to be understood to include water depths of up to 500 m, and very shallow water is to be understood to include water depths of up to 50 m. The end fitting 100 may have particular application for use with a pipe body 102 to provide a flexible pipe 104. The pipe body 102 may comprise a reinforced thermoplastic pipe (RTP), for example. The RTP may be unbonded. However, the end fitting 100 may be equally applicable for use with a flexible composite pipe body of a uniform mono-structure (i.e., the pipe structure comprises no reinforcement, for example, only composite material). The end fitting 100 is configured to receive an end portion 106 of a pipe body 102 and may provide a seal between the pipe body 102 and a connecting component (not shown), which may be a further end fitting, or terminal equipment, and/or transmit loads acting on the pipe body 102.

As shown in Figure 1A, the end fitting 100 comprises a first tubular member 108 and a second tubular member 110. The second tubular member 110 is disposed radially outwardly of the first tubular member 108 to define an annular gap 112 therebetween for receiving the end portion 106 of the pipe body 102. The first tubular member 108 is a stem and the second tubular member 110 is a ferrule. In other words, the first and second tubular members 108, 110 are inner and outer clamping members, respectively, configured to clamp the end portion 106 of the pipe body 102. The second tubular member 110 is disposed coaxially about the first tubular member 108.

The annular gap 112 comprises an opening 114 defined between the first tubular member 108 and the second tubular member 110 at a first end 116 of the annular gap 112. The end portion 106 of the pipe body 102 is receivable in the annular gap 112 through the opening 114 at the first end 116 of the annular gap 112. The first tubular member 108 is thereby only connected to the second tubular member 110 at a second end 118 of the annular gap 112. The first tubular member 108 may be connected to the second tubular member 110 by a bolted or a welded connection, for example.

The annular gap 112 extends radially between a radially outer surface 120 of the first tubular member 108 and a radially inner surface 122 of the second tubular member 110, such that the annular gap 112 has a radial thickness. The first tubular member 108 and/or the second tubular member 110 are configured to be deformed, for example swaged (i.e., crimped or radially cold formed), to increase the diameter of the first tubular member 108 and/or decrease the diameter of the second tubular member 110, such that the radial thickness of the annular gap is reduced and the end portion 106 of the pipe body 102 is compressed and thereby clamped between the first and second tubular members 108. 110. As shown in Figure 1B, only the second tubular member 110 is deformed to facilitate the clamping of the end portion 106 of the pipe body 102. The first tubular member 108 remains substantially stationary during the clamping of the end portion 106 of the pipe body 102. The radially outer surface 120 of the first tubular member 108 provides a first clamping surface, i.e., a surface for contacting a radially inner surface of the end portion 106 of the pipe body 102. The radially inner surface 122 of the second tubular member 110 provides a second clamping surface, i.e., a surface for contacting a radially outer surface of the end portion 106 of the pipe body 102.

As described hereinafter, the end fitting 100 is configured such that, when the end portion 106 of the pipe body 102 is connected to the end fitting 100, removal of the end portion 106 of the pipe body 102 from the annular gap 112 is inhibited. As shown in Figure 1A, the outer diameter of the first tubular member 108 is greater at the first end 116 of the annular gap 112 than at the second end 118 of the annular gap 112. As shown in Figure 1B, when the end portion 106 is clamped between the first and second tubular members 108, 110, the first and second tubular members 108, 110 are deformed such that the diameter of the pipe body 102 at the second end 118 of the annular gap 112 is reduced, whilst the diameter of the pipe body 102 at the first end 116 of the annular gap 112 remains substantially equal to that before the clamping. The clamped end portion 106 of the pipe body 102 thereby substantially corresponds in shape to the radially outer surface 120 of the first tubular member 108. The clamping of the end portion 106 of the pipe body 102 reduces the diameter of reinforcement in a reinforcement layer of the pipe body 102. To remove the pipe body 102 from the annular gap 112 via the first end 116 thereof, the diameter of the pipe body 102 at the second end 118 of the annular gap 112 must be increased to that at the first end 118 of the annular gap 112. Increasing the diameter of the pipe body 102 in this manner requires significant amounts of energy, inhibiting the removal of the end portion 106 of the pipe body 102 from the annular gap 112, and thereby increasing the anchoring capacity of the end fitting 100.

At least a portion of the first tubular member 108 tapers towards the second end 118 of the annular gap 112. In other words, the radial thickness of the first tubular member 108 decreases towards the second end 118 of the annular gap 112. In the illustrated embodiment, the first tubular member 108 is tapered between the first end 116 of the annular gap 112 and an intermediate position 128 along the length of the annular gap 112. The intermediate position 128 is spaced from the second end 118 of the annular gap 112. The first tubular member 108 is thereby not tapered between the intermediate position 128 and the second end 118 of the annular gap 112. In certain embodiments, the first tubular member 108 may be tapered from the first end 116 of the annular gap 112 to the second end 118 of the annular gap 112.

In certain embodiments, the first tubular member 108 is tapered between a further intermediate position along the length of the annular gap 112 and the second end 118 of the annular gap. The further intermediate position is spaced from the first end 116 of the annular gap 112. In certain embodiments, the first tubular member 108 may be tapered between a first intermediate position along the length of the annular gap 112 and a second intermediate position along the length of the annular gap 112. The first intermediate position may be closer to the first end 116 of the annular gap 112 than the second intermediate position. The second intermediate position may be spaced from the first intermediate position.

In the illustrated embodiment, the first tubular member 108 tapers linearly. In certain embodiments, the first tubular member 108 may taper non-linearly. In such embodiments, the first tubular member 108 may be curved and/or stepped along the length of the annular gap 112. In the illustrated embodiment, the first tubular member 108 tapers continuously. In other words, the radial thickness of the first tubular member 108 decreases continuously towards the second end 118 of the annular gap 112. In certain embodiments, the first tubular member 108 may taper discontinuously. In other words, the radial thickness of the first tubular member 108 may decrease along at least two discrete portions, spaced from one another along the length of the annular gap 112.

The inner diameter of the first tubular member 108 at the first and second ends 116, 118 of the annular gap 112 is substantially equal.

The first tubular member 108 comprises a chamfered portion 124 for facilitating the receipt of the end portion 106 of the pipe body 102 in the annular gap 112.

As further shown in Figure 1A, at least a portion of the second tubular member 110 tapers towards the first end 116 of the annular gap 112. In other words, the radial thickness of the second tubular member 110 decreases towards the first end 116 of the annular gap 112. The second tubular member 110 is thereby tapered in an opposite direction to the first tubular member 108. In the illustrated embodiment, the outer diameter of the second tubular member 110 is greater at the second end 118 of the annular gap 112 than at the first end 116 of the annular gap 112, and an inner diameter of the second tubular member 110 at the first and second ends 116, 118 of the annular gap 112 is substantially equal. The end fitting 100 is thereby configured such that, when the end potion 106 of the pipe body 102 is connected to the end fitting 100, the combined clamping force of the first and second tubular members 108, 110 is substantially uniform at each point along the length of the annular gap 112. In certain embodiments, the end fitting 100 is configured such that the combined clamping force of the first and second tubular members 108, 110 is substantially uniform along at least a portion of the length of the annular gap 112.

In the illustrated embodiment, the second tubular member 110 is tapered from the intermediate position 128 along the length of the annular gap 112 to the first end 116 of the annular gap 112. The intermediate position 128 is spaced from the second end 118 of the annular gap 112. Incertain embodiments, the second tubular member 110 may be tapered from the second end 118 of the annular gap 112 to the first end 116 of the annular gap 112. In the certain embodiments, the second tubular member 110 may be tapered from the second end 118 of the annular gap 112 to a further intermediate position along the length of the annular gap 112. The further intermediate position may be spaced from the first end 116 of the annular gap 112. In certain embodiments, the second tubular member 110 may be tapered between a first intermediate position along the length of the annular gap 112 and a second intermediate position along the length of the annular gap 112. The first intermediate position may be closer to the second end 118 of the annular gap 112 than the second intermediate position. The second intermediate position may thereby be spaced from the first intermediate position.

In the illustrated embodiment, the second tubular member 110 tapers linearly. In certain embodiments, the second tubular member 110 may taper non-linearly. In such embodiments, the second tubular member 110 may be curved and/or stepped.

In the illustrated embodiment, the second tubular member 110 tapers continuously. In other words, the radial thickness of the first tubular member 110 decreases continuously towards the first end 116 of the annular gap 112. In certain embodiments, the second tubular member 110 may taper discontinuously. In other words, the radial thickness of the second tubular member 110 may decrease along at least two discrete portions, spaced from one another along the length of the annular gap 112.

The radially outer surface 120 of the first tubular member 108 and/or the radially inner surface 122 of the second tubular member 110 may comprise one or more of radially projecting teeth or knurls, surface undulations, and recesses for O-rings. In the illustrated embodiment, a portion of the radially outer surface 120 of the first tubular member 108 comprises homogenous radially projecting teeth that project into the annular gap 112 to engage the end portion 106 of the pipe body 102. The radially projecting teeth or knurls, surface undulations, and/or recesses for O-rings may facilitate clamping of the end portion 106 of the pipe body 102. In certain embodiments, the radially projecting teeth or knurls and/or surface undulations may extend along at least a portion of the radially outer surface 120 and/or the radially inner surface 122, and may extend circumferentially, wholly or partially, about a circumference of the radially outer surface 120 and/or the radially inner surface 122. The radially projecting teeth or knurls and/or surface undulations may be homogenous, or may vary by type, size, and/or spacing. The radially projecting teeth or knurls and/or surface undulations may be angled to inhibit disconnection of the pipe body 102, when the end portion 106 thereof is clamped between the first and second tubular members 108, 110.

The first tubular member 108 and/or the second tubular member 110 may comprise or be formed of one or more of a metallic material, steel, aluminium, copper brass, a reinforced or non-reinforced thermoplastic polymer, a reinforced or non-reinforced thermoset polymer, and a composite material. In certain embodiments, the first tubular member 108 and/or the second tubular member 110 may comprise or be formed of an iron based alloy. The material(s) of the first tubular member 108 and/or the second tubular member 110 may be configured based upon the environment in which the end fitting 100 is disposed. In certain embodiments, when the end fitting 100 is disposed in water, a low hydrogen sulphide environment, and/or a low chloride environment, the first tubular member 108 and/or the second tubular member 110 may comprise carbon steel. Optionally, the carbon steel may comprise a fusion bonded epoxy coating. In certain embodiments, when the end fitting 100 is disposed in a moderate hydrogen sulphide environment and/or a high chloride environment, the first tubular member 108 and/or the second tubular member 110 may comprise stainless steel, for example 316SS. In certain embodiments, when the end fitting 100 is disposed in a highly corrosive environment, the first tubular member 108 and/or the second tubular member 110 may comprise a corrosion resistant alloy, for example duplex or Inconel.

As shown in Figures 1A and 1B, the first tubular member 108 comprises a bore 130 extending through the centre thereof for conveying a fluid, for example oil and/or gas field fluid. The bore 130 is open at each end thereof. The first tubular member 108 further comprises a flange 132. The flange 132 may facilitate connection of the end fitting 100 to a connecting component (not shown), for example a further end fitting. In certain embodiments, the flange 132 may be configured in accordance with the American Petroleum Institute specification API 6A.

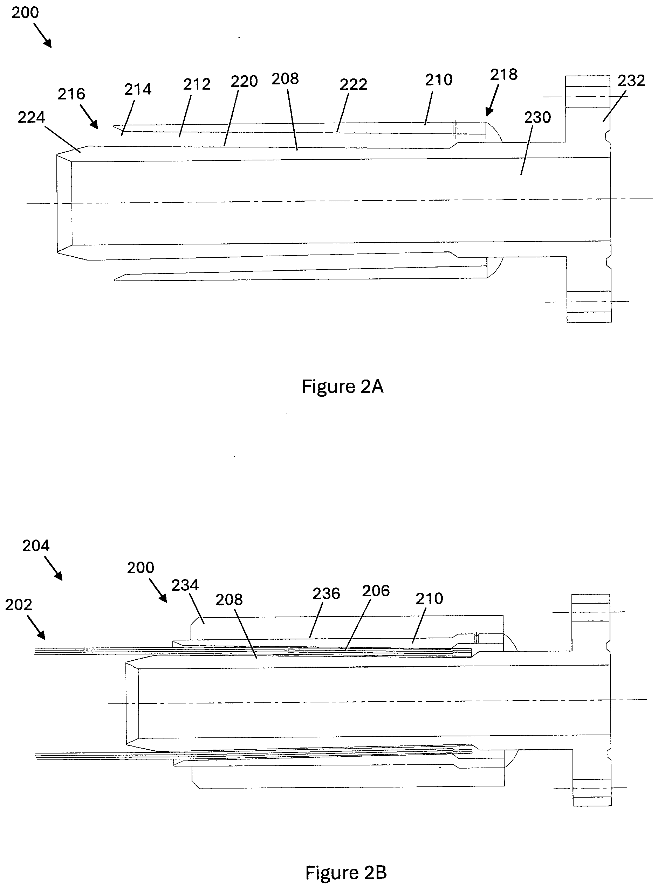

Turning to Figures 2A and B, there is illustrated an end fitting 200 according to an alternative embodiment of the invention, though the same reference numerals, offset by a factor of 100, are used to identify the same or similar features as described above. Again, the end fitting 200 may have particular application in conveying oil and/or gas field fluids, and/or may have particular application in onshore, shallow water and/or very shallow water applications.

In a similar manner to the embodiment shown in Figures 1A and 1B, at least a portion of the second tubular member 210 tapers towards the first end of the annular gap.

However, as shown in Figure 2A, the outer diameter of the second tubular member 210 at the first and second ends 216, 218 of the annular gap 212 is substantially equal, and the inner diameter of the second tubular member 210 is greater at the first end 216 of the annular gap 212 than at the second end 218 of the annular gap 212. The end fitting 200 is thereby configured such that, when the end portion 206 of the pipe body 202 is connected to the end fitting 200, the combined clamping force of the first and second tubular members 208, 210 is uniform at each point along the length of the annular gap 212.

In the illustrated embodiment, the second tubular member 210 is tapered from the second end 218 of the annular gap 212 to the first end 216 of the annular gap 212. In certain embodiments, the second tubular member 210 may be tapered from an intermediate position along the length of the annular gap 212 to the first end 216 of the annular gap 212. The intermediate position may be spaced from the second end 218 of the annular gap 212. In the certain embodiments, the second tubular member 210 may be tapered from the second end 218 of the annular gap 212 to a further intermediate position along the length of the annular gap 212. The further intermediate position may be spaced from the first end 216 of the annular gap 212. In certain embodiments, the second tubular member 210 may be tapered between a first intermediate position along the length of the annular gap 112 and a second intermediate position along the length of the annular gap 212. The first intermediate position may be closer to the second end 218 of the annular gap 212 than the second intermediate position. The second intermediate position may thereby be spaced from the first intermediate position.

In the illustrated embodiment, the second tubular member 210 tapers linearly. In certain embodiments, the second tubular member 210 may taper non-linearly. In such embodiments, the second tubular member 210 may be curved and/or stepped. In the illustrated embodiment, the second tubular member 210 tapers continuously. In other words, the radial thickness of the first tubular member 210 decreases continuously towards the first end 216 of the annular gap 212. In certain embodiments, the second tubular member 210 may taper discontinuously. In other words, the radial thickness of the second tubular member 210 may decrease along at least two discrete portions, spaced from one another along the length of the annular gap 212.

As shown in Figure 2B, the second tubular member 210 is deformed, for example swaged, to clamp the end portion 206 of the pipe body 202 between the first and second tubular members 208, 210. In the illustrated embodiment, the deforming of the second tubular member 210 comprises disposing a third tubular member 234 about the radially outer surface 236 of the second tubular member 208, such that there is substantially no gap therebetween. The third tubular member 234 is thereby in intimate relation with the radially outer surface 236 of the second tubular member 208 so as to support the second tubular member 210. The third tubular member 234 is coaxial with the first tubular member 208 and/or the second tubular member 210. In certain embodiments, the third tubular member 234 may comprise a swaging sleeve.

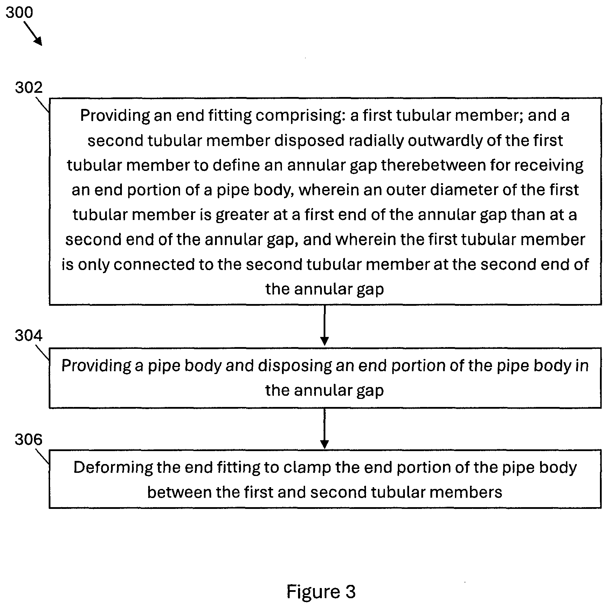

Figure 3 illustrates a method 300 of connecting an end fitting 100, 200 to an end portion 106, 206 of a pipe body 102, 202 according to an embodiment of the invention. In a similar manner to the end fittings 100, 200 described above, the method 300 may have particular application in conveying oil and/or gas field fluids, and/or may have particular application in onshore, shallow water, and/or very shallow water applications.

The method 300 comprises a first step 302 of providing an end fitting 100, 200. The end fitting 100, 200 may be that described with reference to Figures 1A or 2A. The method 300 comprises a second step 304 of providing a pipe body 102, 202 and disposing an end portion 106, 206 of the pipe body 102, 202 in the annular gap 112, 212 of the end fitting 100, 200. In certain embodiments, the pipe body 102, 202 may comprise a reinforced thermoplastic pipe (RTP). In such an embodiment, the RTP may be unbonded. The method 300 comprises a third step 306 of deforming the end fitting 100, 200 to clamp the end portion 106, 206 of the pipe body 102, 202 between the first tubular member 108, 208 and the second tubular members 110, 210. The deforming the end fitting 100, 200 may comprise swaging the first tubular member 108, 208 and/or the second tubular member 110, 210. In certain embodiments, the swaging the second tubular member 210 may comprise urging a third tubular member 234 about a radially outer surface 236 of the second tubular member 210 so as to support the second tubular member 210. In such an embodiment, the third tubular member 234 may comprise a swaging sleeve.

The invention is not restricted to the details of any foregoing embodiments. It will be appreciated by those skilled in the art that several variations to the aforementioned embodiments are envisaged without departing from the scope of the invention. For example, at least a portion of the second tubular may taper towards the second end of the annular gap, such that the inner diameter of the second tubular member is greater at the first end of the annular gap than at the second end of the annular gap. In such an embodiment, at least a portion of the first tubular member may be tapered towards the first end of the annular gap. When the end portion of the pipe body is clamped between the first and second tubular members, the diameter of the pipe body at the second end of the annular gap is increased, whilst the diameter of the pipe body at the first end of the annular gap remains substantially equal to that before the clamping. To remove the pipe body from the annular gap via the first end thereof, the diameter of the pipe body at the second end of the annular gap must be reduced to that at the first end of the annular gap. Reducing the diameter of the pipe body in this manner requires significant amounts of energy, inhibiting the removal of the end portion of the pipe body from the annular gap, and thereby increasing the anchoring capacity of the end fitting.

Throughout the description and claims of this specification, the words "comprise" and "contain" and variations of them mean "including but not limited to", and they are not intended to (and do not) exclude other moieties, additives, components, integers or steps. Throughout the description and claims of this specification, the singular encompasses the plural unless the context otherwise requires. In particular, where the indefinite article is used, the specification is to be understood as contemplating plurality as well as singularity, unless the context requires otherwise.

Features, integers, or characteristics described in conjunction with a particular aspect, embodiment or example of the invention are to be understood to be applicable to any other aspect, embodiment or example described herein unless incompatible therewith. In particular, the words "certain embodiments" are to be understood to mean any embodiment described, illustrated, or otherwise disclosed herein, unless expressly stated otherwise. All of the features disclosed in this specification (including any accompanying claims, abstract and drawings), and/or all of the steps of any method or process so disclosed, may be combined in any combination, except combinations where at least some of such features and/or steps are mutually exclusive. The invention extends to any novel one, or any novel combination, of the features disclosed in this specification (including any accompanying claims, abstract and drawings), or to any novel one, or any novel combination, of the steps of any method or process so disclosed.

## Claims

1. An end fitting for a reinforced thermoplastic pipe, the end fitting comprising:
a first tubular member; and
a second tubular member disposed radially outwardly of the first tubular member to define an annular gap therebetween for receiving an end portion of a pipe body,
wherein an outer diameter of the first tubular member is greater at a first end of the annular gap than at a second end of the annular gap, and
wherein the first tubular member is only connected to the second tubular member at the second end of the annular gap.

2. An end fitting according to claim 1, wherein the end fitting is configured such that, when an end portion of a pipe body is connected to the end fitting, removal of the end portion of the pipe body from the annular gap is inhibited.

3. An end fitting according to claim 1 or 2, wherein the annular gap comprises an opening defined between the first tubular member and the second tubular member at the first end of the annular gap.

4. An end fitting according to any preceding claim, wherein at least a portion of the first tubular member tapers towards the second end of the annular gap, and optionally
wherein the first tubular member tapers linearly.

5. An end fitting according to any preceding claim, wherein at least a portion of the second tubular member tapers towards the first end of the annular gap, and optionally
wherein the second tubular member tapers linearly.

6. An end fitting according to claim 5, wherein an outer diameter of the second tubular member is greater at the second end of the annular gap than at the first end of the annular gap, and
wherein an inner diameter of the second tubular member at the first and second ends of the annular gap are substantially equal.

7. An end fitting according to claim 5, wherein an outer diameter of the second tubular member at the first and second ends of the annular gap are substantially equal, and
wherein an inner diameter of the second tubular member is greater at the first end of the annular gap than at the second end of the annular gap.

8. An end fitting according to any preceding claim, wherein the second tubular member is disposed coaxially about the first tubular member.

9. An end fitting according to any preceding claim, wherein a radially outer surface of the first tubular member and/or a radially inner surface of the second tubular member comprise one or more of radially projecting teeth or knurls, surface undulations, and recesses for O-rings.

10. An end fitting according to any preceding claim, wherein the first tubular member and/or the second tubular member comprise or is formed of one or more of a metallic material, steel, aluminium, copper brass, a reinforced or non-reinforced thermoplastic polymer, a reinforced or non-reinforced thermoset polymer, and a composite material.

11. An end fitting according to any preceding claim, wherein a third tubular member is in intimate relation with a radially outer surface of the second tubular member to support the second tubular member.

12. A flexible pipe, the flexible pipe comprising:
an end fitting according to any preceding claim; and
a pipe body,
wherein an end portion of the pipe body is disposed in the annular gap.

13. A flexible pipe according to claim 12, wherein the pipe body comprises a reinforced thermoplastic pipe, and optionally wherein the reinforced thermoplastic pipe is unbonded.

14. A method of connecting an end fitting to an end portion of a pipe body, the method comprising the steps of:
providing an end fitting according to any of claims 1 to 11;
providing a pipe body and disposing an end portion of the pipe body in the annular gap; and
deforming the end fitting to clamp the end portion of the pipe body between the first and second tubular members.

15. A method according to claim 14, wherein the deforming the end fitting comprises swaging the first tubular member and/or the second tubular member, and optionally
wherein the swaging the second tubular member comprises urging a third tubular member about a radially outer surface of the second tubular member to support the second tubular member.
